# EUROPEAN PATENT SPECIFICATION

(11) **EP 3 510 201 B1**
(45) Date of publication and mention of the grant of the patent: **06.07.2022**
(21) Application number: 16791673.3
(22) Date of filing: 08.09.2016
(51) Int. Cl.: E01C 11/26, E04F 15/02, E04F 15/10, H05B 3/34, H05B 3/36, F24D 13/02, A01K 1/015

(54) **BIDIRECTIONAL-HEATING PREFABRICATED CONTINUOUS COMPOSITE FLOORING**
VORGEFERTIGTER KONTINUIERLICHER ZUSAMMENGESETZTER FUSSBODEN FÜR BIDIREKTIONALES HEIZEN
PLANCHER COMPOSITE CONTINU PRÉFABRIQUÉ CHAUFFANT BIDIRECTIONNEL

(43) Date of publication of application: 17.07.2019
(73) Proprietor: ROSSO24 S.R.L., 37121 Verona (IT)
(72) Inventor: D'AMICO, Piermatteo, 37127 Verona (IT)
(74) Representative: Contadin, Giorgio
(86) International application number: PCT/IB2016/055359
(87) International publication number: WO 2018/046983

(56) References cited:
- US-A- 5 637 247
- US-A1- 2007 262 073
- US-B1- 6 180 929

## Description

The present invention concerns a bidirectional-heating prefabricated continuous composite flooring, to be used outside or in environments at least partly exposed to the outside, however used as covering or coating element and preferably and usually, although not exclusively, consisting of one or more rolls (hence the term of continuous pavement, in the title) to be laid, in simple support and removably, above a support surface in order to get walkwable, bicycle and/or carriageable decking.

As continuous flooring is meant in this case a single covering element intended to be placed in a single step, without joints and/or expansion or connection joints in order to cover more or less large areas, such as those ones at the safety entrances to buildings, of an industrial plant, a hangar, a stable, a shed, a pets breeding or zootechnics lean-to, or of the work occupied zone of street vendors of city or municipal markets and which exploit the simple daily use and so on.

Thus, the present invention is part of the field of building materials and, in particular, it relates to a bidirectional-heating prefabricated continuous composite, preferably deicing, flooring having significant thermal-conductive capacity and high deformability and mechanical strength properties, such as to make it not only walkable and bicycle, in its various embodiments, but also suitable for vehicles in many embodiments.

### PRIOR ART

As known, in the field of building air-conditioning and more specifically in applications of radiant thermohydraulics floor systems of last generation, the prefabricated slabs for the formation of thermo-radiating sub-floorings are made of low mechanical strength materials such as typically polystyrene and cork because they must be thermally insulating and able to contain the heat dispersion towards the support surface.

Given their reduced mechanical strength, the possible applications of the prefabricated slabs are constituted by inner sub-floorings in residential type circles and never outside and require protection coating made of cement conglomerates and walkable protection surface flooring.

It is clear the current limitation of not being able to use such prefabricated pipe-holder slabs in the industry circle or outside of buildings where such a mechanical condition would have a short life stability and significant repercussions on the use of built surface, pointing out that these systems provide for a fixed installation and are installations defined as non-removable.

Also high-strength modular systems are currently available that, however, has the problem of high rigidity and fragility linked to the necessarily small physical sizes: these systems are constituted by metallic or wood prefabricated elements or by very harsh composite solutions to be built in place of invasive sizes and long times of installation and re-use, often overly invasive in respect of the production cycles. Moreover, the systems currently in use, because of their significant and necessary physical size, require resistant and perfectly planar support surfaces: they cannot, therefore, be installed without proper preparation of the support surface and they can no longer be moved.

Therefore, it is at present impossible to apply slab-like artifacts made as described above of metal, wood, concrete or resinous agglomerate without interfering with the production activities or the usability of the environment for long periods.

In addition to the mechanical-static problems related to a rigid product made in place with cement, resilient or metallic conglomerates, it is also necessary to consider the deterioration degree that affects these materials, due to the work and mechanical load to be supported in an industry, to the prolonged contact with water and/or polluting weathering (oxidation and carbonation) and to the low temperatures intolerance: it follows that the replacement of these elements entails even longer times and quite significant production shutdowns.

Again, with specific reference to the technical field which the present invention is oriented to, the cement conglomerate and resinous conglomerate used in the prior art have the drawback of having a poor ability to conduct heat, due to the physical features of the materials and to the high mass necessary to ensure the stability and the duration of the artifact itself, with the consequence that they are certainly unsuitable when used in the form of prefabricated panels (or artifacts or slabs) or radiant systems made in place in order to form a flooring of inner environments of any building, whether civil, public or industrial, or outer dedicated spaces.

Without taking into consideration the fact that the concrete artifacts of current use require surface finishing workings, also rough and even in industrial environments where consistency with applicable laws on safety at work and use of the products requires it.

In this general context, prior document published as WO2008/092173 A1 fits for example, which describes a tile heating system of only and purely unidirectional type, electrically adjusted and intended to open areas: when installed, it permanently remains in such a condition and it cannot therefore be removed.

In addition, such a prior art document provides for low voltage power supply (220 Volts) and the related radiant system is therefore not usable in places open to the public and in places of work, as it does not meet the legislative parameters in terms of safety (for example, those ones of former Italian legislative decree no. 626 of 19.09.1994, now replaced by Italian legislative decree no. 81 of 06.02.2008). In the description of this document of known type still the use of the system in all the circumstances listed above recovers, but by rule it is prohibited due to the high voltage and the possible risk of electric shock accident.

In addition, the use of such a tile heating system powered at low voltage (220 Volts) involves no physiological benefit, not at all, the resulting formation of magnetic fields involves troubles of the user's health who stays on the module (tile) for work or other purposes.

Quite similarly it is possible to argue also about the prior document published as DE 8701104U1 which describes an unidirectional heating system for access areas of buildings powered at low voltage (220 Volts): it relates also in this case to a tile (modular element) of predefined size which is used to defrost the steps of access to buildings, which does not require heating during the stop of users and which is not suitable to be carriage by vehicles.

Similarly it is possible to argue about the known art document published as WO97/22465 A1 which describes a thermal walkable cover of modular type and powered at low voltage (220 Volts), wherein heating is unidirectional.

Furthermore, prior art document published as FR2623961 A1 describes a heating film assuming the provision of an electric resistance, interposed between two insulating layers and powered at low voltage (220 Volts) that heats and produces heat in only one direction.

In addition, prior art document published as DE202011104749 U1 concerns a modular layered surface heating system for the heated indoor surfaces, in particular planes of public transport means by rail (such as trams, trains, buses, subways and so on), wherein the heating means are powered at low voltage (230 Volts) and heat the environment in a single direction.

For its part, known document published as US2004/0074631 A1 relates to a floor heating system which is assembled in place (during installation) and permanently, not removably, as a typical and traditional hydraulic flooring radiant system: the produced heating is unidirectional and is not usable outside due to mechanics and especially to insufficient expressed thermal power.

Prior art document published as DE19947349 A1 relates to a layered modular floor panel for cattle provided with at least four layers (rubber base layer, polymeric concrete intermediate layer, first upper reinforcing layer and second upper thermally insulating layer, arranged above the first upper reinforcement layer) and comprising heating means (of hydraulic or electric type), which are embedded or incorporated within the polymeric concrete intermediate layer and which operate by heating in a single direction, with reduced thermal powers expressed, just sufficient to operate indoor.

Prior art documents published as US6180929 B1, US5637247 A and US2007/262073 A1 discloses constructional examples of heating pad, mat, cover systems of the layered type and powered at low voltage (not lower than 110 Volts and up to at least 240 Volts).

In the field of the radiant floor heating it is thus clear the need to solve a problem which anyone in the field concerned hasn't been able to fully and adequately remedy to date, and that for an established design practice which this sector has been setting on for years: such a drawback is associated with the inability, in some ways ancestral, to fully satisfy an important need, that one of having a heating (or radiant) flooring which, in addition to present mechanical strength comparable to that one of concrete floorings, but higher traction or flexural mechanical strength, acts as a finishing, precisely heating, element for indoor but mainly outdoor environments and which, even in presence of critical conditions such as snow or icy cold, avoids, especially in the winter season, the formation of ice and thus allows people to exploit, even with vehicles, the areas in which it is installed in improved thermal comfort conditions both for the antislip passing and the total safety against electric shock.

### SUMMARY OF THE INVENTION

The present invention seeks to overcome the drawbacks and limits of the known technique just highlighted in treating the rigid thermo-climatic conditions outside of the buildings in order to confer an improved comfort and a greater safety.

In particular, primary purpose of the present invention is to provide a bidirectional-heating prefabricated continuous composite flooring that is suitable to be installed and stored, in simple and rapid way, in outdoor or at least partly exposed, albeit covered or repaired, to the weathering environments in order to provide the users with a directly usable, walkable, bicycle and, if the application requirements are more demanding, even carriageable, area which is frequented by the users themselves in conditions both of absolute safety and of improved thermal comfort even when the weather is particularly critical, typically during the winter season or in the mountain places.

As part of this purpose, it is thus task of the invention to design a bidirectional-heating prefabricated continuous composite flooring, preferably deicing and prefabricated, which reduces the risks for the physical safety of people - especially children and the elderly, notoriously more exposed to dangers because weaker - who rest on the flooring (or pass through it on foot or by bicycle or in any way exploit it), especially in outdoors or at least partly exposed to the outside environments in presence of the aforementioned critical weather conditions.

It is a further task of the present invention to provide a bidirectional-heating prefabricated continuous composite flooring which makes easier and more comfortable the working conditions of the manpower in industrial, handicraft or still working circles partly exposed to the atmospheric conditions, such as terrace of bars and restaurants, airport hangars, farms sheds, livestock farms, rest/permanence areas of street vendors in outdoor city, municipal and/or local markets and so on.

It is a second purpose of the invention to create a bidirectional-heating prefabricated continuous composite flooring which can be easily and quickly, even removably, installed and therefore, presents installation and/or maintenance costs lower than those ones which can be found in the traditional current heating and conditioning sector.

It is a further purpose of the invention to provide a bidirectional-heating prefabricated continuous composite flooring which present a pleasant aesthetic effect, however, improved with respect to the pre-existing condition and to what is offered by the floorings currently used in the environments which the flooring itself of the invention is intended to.

It is another purpose of the present invention to provide a bidirectional-heating prefabricated continuous composite flooring, preferably deicing, which presents at the same time relevant mechanical properties of compression, tension and flexural strength, as well as high resistance to frost and high water permeability.

It is a last but not least purpose of the invention to make available a bidirectional-heating prefabricated continuous composite flooring, preferably also deicing, which is transportable and movable by the operators in a way much easier and less burdensome than the known floorings or installations.

The foregoing purposes are achieved by means of a bidirectional-heating prefabricated continuous composite flooring according to claim 1 attached hereto, as hereinafter referred for the sake of exposure convenience.

Further technical features of detail of the bidirectional-heating prefabricated continuous composite flooring of the present invention are indicated in the respective dependent claims.

The above-mentioned claims, in the following specifically and concretely defined, shall mean an integral part of the present description.

### ADVANTAGES

Advantageously, the heating prefabricated continuous composite flooring, preferably deicing, object of the invention, while presenting high density and resistance to compression - the latter parameter comparable if not superior to that one of a common and traditional cement agglomerate - but also flexural resistance and elastic memory - which cannot be found, instead, in a cement or resinous agglomerate - lends itself to be easily and quickly installed not only within a building but also and especially in outdoor environments (outdoor) or at least partly exposed, albeit covered or repaired, to the weather conditions, providing the users with a heated surface directly usable, walkable, bicycle and/or carriageable in conditions of absolute safety and thermal comfort even when the weather is particularly critical and dangerous, typically during the winter season (but not only) marked by rain, snow and/or ice and negative temperatures (below zero).

Still advantageously, the bidirectional-heating prefabricated continuous composite flooring of the invention significantly attenuates the trauma of a possible incidental fall on it of the people, thanks to the flexibility or elastic memory of the material which is made of, in particular the base substrate made of conductive material which, among the essential components of the flooring of the cited in claim 1 attached hereto, is that one which generally has a greater thickness: in this, the flooring of the invention evidently distinguishes from the prior art mainly represented by cement or resinous conglomerates.

Such an effect or result achieved by the bidirectional-heating prefabricated continuous composite flooring of the invention is extremely accentuated in the preferred embodiment in which also the conductive material which the covering and protection layer is made of is flexible or elastically yielding, for example an aggregate made of recycled or virgin PVC, loaded or not (in case where it has high density) with conductive aggregates of mineral or synthetic nature.

Equally advantageously, the heating prefabricated continuous composite flooring of the invention makes the conditions at which the insiders work indoor and outdoor more comfortable than the current situation: the insiders are thus exposed to thermal conditions more favorable than they can get in the known art, beyond to the beneficial effects on the organism of the infrared radiation which define an improved physiological condition, to all the advantage of their satisfaction, physical condition and mood with which they approach a working day also marked by adverse weather conditions.

Equally, in advantageous way, the bidirectional-heating prefabricated continuous composite flooring of the invention is installed and used in a simple and rapid way, also removably, and also on existing floors and this primarily thanks to the fact that it is electrically powered, executive solution in which the flooring of the invention also presents the ice defrost function already formed.

In particular, the possibility to remove after a specified period of time and after a few cycles of operation and reinstall, in both phases with extreme simplicity and rapidity, the bidirectional-heating prefabricated continuous composite flooring of the invention represents a clear advantage with respect to the prior art where the installations are definitive and no longer removable.

In advantageous manner, moreover, the bidirectional-heating prefabricated continuous composite flooring of the present invention constitutes a usable, walkable, bicycle and/or carriageable covering having a pleasant, customizable at will according to the needs of use aesthetic effect, not achievable or verifiable with known type floorings used for the same environments.

Always advantageously, the bidirectional-heating prefabricated continuous composite flooring of the present invention, in the shape of rolls, carpets or large superficial extension strips with which it is from time to time prepared at factory (monolithic or assembled in production), it is transportable, movable and storable in stock in a manner easier and more comfortable than equivalent floorings of known type, by virtue of its ability to be stored compacted in rolls and of its weight significantly lower than the known solutions which (even remotely) are more close to it, aspect, which however, as mentioned, does not negatively affect the mechanical properties of compressive, traction and flexural strength and the durability of the slab-like artifact.

### BRIEF DESCRIPTION OF THE DRAWINGS

Further features and peculiarities of the present invention will become apparent from the description that follows, relating to a preferred embodiment of the bidirectional-heating prefabricated continuous composite flooring, preferably although not exclusively deicing too, of the invention itself, with reference to the accompanying drawing tables, in which:
- figure 1 is an exploded isometric view of an embodiment of the prefabricated continuous composite heating flooring of the invention;
- figures 2 and 3 are schematic isometric views of two distinct applications of the heating prefabricated continuous composite flooring of figure 1.

### DETAILED DESCRIPTION OF A PREFERRED EMBODIMENT OF THE INVENTION

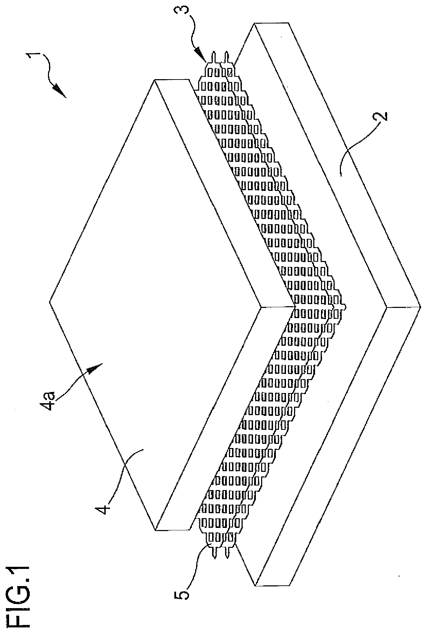

The bidirectional-heating prefabricated continuous composite flooring of the invention is illustrated in figure 1, where it is generally indicated with 1, in a first possible basic constructive embodiment, that one which provides the minimum essential components. In this case, the heating prefabricated continuous composite flooring 1 is also deicing.

According to the peculiar and main aspect of the invention, the heating prefabricated continuous composite flooring 1 having the features of claim 1 includes a layered artifact which, in turn, specifically includes:
- a flexible and/or elastically yielding base substrate 2, made of a conductive material and suitable to be placed on a reference surface, such as the road pavement seat for vendors markets, by pure illustrative and indicative but nonlimiting example;
- thermo-heating means, indicated as a whole with 3, arranged above the base substrate 2;
- a covering and protection layer 4, made of a conductive material, arranged above the thermo-heating means 3 (to practically get an overall structure of the sandwich type) and provided with an outer surface facing upwardly 4a providing for a heating and deicing decking which in this case is walkable and/or bicycle.

In such a way, in its basic and minimal embodiment, the heating prefabricated continuous composite flooring 1 of the invention achieves a bidirectional heating (i.e. both upwardly, above the covering and protection layer 4 and downwardly, below the base substrate 2), not verifiable in the prior art: this allows, when necessary, to avoid that, at a later time and in presence of somewhat likely harsh temperatures, the same water that inevitably forms with the dissolution (caused by the thermo-heating means 3) of the snow present on the covering and protection layer and that thus percolates by gravity downwardly (thus towards the base substrate 2), ices, with the harmful and negative consequences that this determines for example for the stability and physical safety of people walking on the covering and protection layer 4.

In the present case, the thermo-heating means 3 are of the electric type and include, preferably, a laminar semi-conductive element (or film or membrane) 5 at very low voltage, provided with a single electrical connection, for the sake of simplicity not shown in the figures attached, for the connection to an electric power supply source at very low voltage (as typically and commonly understood, i.e. 12 Volts up to 48 Volts), whether it be a power pack or a transportable battery.

More in detail, the laminar semi-conductive element 5 is made of a combination of carbon, PRT (Italian acronym of netting polyethylene), silver glance and copper materials.

Such a laminar semi-conductive element 5 produces a long-wave infrared electromagnetic radiation whose wavelength has many beneficial properties: it allows the rapid decrease in the level of lactic acid (the acid builds up and causes pain in the muscles when too much exercise is practiced or a lot of stress is accumulated), it stimulates endorphins so-called 'happy hormones in the brain' and eliminates many bacteria and parasitic organisms.

In further addition, the long-wave infrared electromagnetic radiation penetrates the tissues, detoxifies the cells by vibrating ion channels, reduces bloating, improves lymphatic flow and blood circulation and attracts calcium towards the cell membranes, where it must arrive to implement an effective cure.

Moreover, the long-wave infrared electromagnetic radiation simultaneously reduces the volume of water piles, giving them more mobility in order they pass through the cell tissues better. In doing so those overactive or energized water molecules, during transit firstly at the entry and then at the output, drag with them the toxins which previously remained motionless.

According to the experts of the European studies center, the continued exposure to electromagnetic fields could cause serious harm to health. All people are daily exposed to these fields, automatically caused by the production of electricity. This concerns the use of home appliances, such as electric heaters and 220 Volts thermo-heating panels, low voltage underground cables (220 Volts), etc.

While it is possible to shield the electric fields, it is possible to defend against magnetic fields only by moving away from the source of production, but if low voltage heating tiles (210-230 Volts) heating for example in the workplace are used, this is not possible and therefore the people involved are negatively subject to the electromagnetic field produced.

The risks for the persons' health are thus numerous, punctually listed in the European studies center report: it goes from metabolism alterations to consequences produced by the free radicals emitted by the electromagnetic fields, proteins and cell membranes damage, genes and DNA modification, antioxidant hormones reduction, essential enzymatic and biochemical processes alteration, calcium levels alteration in the central nervous system, in the brain and in the heart.

In this embodiment, the heating prefabricated continuous composite flooring 1 of the invention is especially suitable to be realized in prefabricated rolls, for very low voltage values in the range of 12, 24, 30 and 48 Volts and expressed high heating power and for applications in outdoor environments even in presence of water, snow and/or ice - with defrosting and ice formation prevention function (deicing) - both as primary flooring of first application and as flooring applied on already existing floors, capable of producing thermal comfort to the user, perfectly and smoothly adapting itself to the support surface, regardless of its bearing features.

It follows that, in this specific embodiment, the heating prefabricated continuous composite flooring 1 of the invention extends, in applicative conditions, for a relevant area, not limited to that one of a simple tile (of prefixed sizes, as large), determining advantageously, on one hand, an installation easier and faster than the prior art, for example with respect to the prior art document US2004/0074631 A1, and, on the other hand, a reduction in the risk of accidents due to electric shocks with respect to a modular flooring such as that one described for example in the prior documents WO2008/092173 A1, DE8701104 U1, WO97/22465 A1 and FR2623961 A1.

In this embodiment, the heating prefabricated continuous composite flooring 1 of the invention is usable in conditions of absolute safety thanks not only to the fact that it avoids the formation of ice but also to the fact that the laminar semi-conductive element 5 of the thermo-heating means 3 is firstly of very low voltage type and, secondly, is integrally embedded in the overall sandwich structure formed by the flexible and/or elastically yielding base substrate 2 and the covering and protection layer 4 and is connected at an its confined peripheral and perimetrical zone, partly hidden to the sight of the people and/or not immediately accessible to the same, to the very low voltage power source.

As already observed, some systems of the known type currently used provide a power supply of the low voltage (220 Volts) resistive elements, so their applicative possibilities are reduced due to the risk of accidents by electric shock coming from powering up the product, malfunctions, failures or accidental damages, mostly in the use in the workplace or in the public service places where the rules restrict the use of these systems due to a not total accidents safety.

The current invention also differs in this respect from the prior art, because the heating prefabricated continuous composite flooring electrically operated, such as that one of figure 1 indicated with 1, utilizes a very low voltage power supply, preferably 12 to 48 Volts, on thermo-heating means 3 comprising the innovative laminar semi-conductive element 5 made of copper, carbon and silver glance which allows it to be used, without risk of shock, even in presence of copious quantities of water or inadvertent or less damage of the artifact.

Indeed, in the bidirectional-heating prefabricated continuous composite flooring 1 of the invention there is no presence of either high voltage or low voltage (in the common technical sense) on the whole surface and also in the power supply cables of the layered artifact: the electrically supplied composite flooring 1 is thus able to operate, on one hand, as heating element for the user who rests on the area above it (localized air-conditioning) and, on the other hand, as heating and deicing flooring. The system consisting of the bidirectional-heating prefabricated continuous composite flooring 1 of the present invention is also completely removable for daily changes, contrary to the prior art.

It is understood that in other embodiments of the bidirectional-heating prefabricated continuous composite flooring of the present invention, not shown in the drawings that follow, the thermo-heating means could be of another type and include a number of laminar resistive elements greater than one, such number being able to vary at will starting from one, although consistent with the expected results, operating costs and application requirements.

As far as the conductive material which is made of both the flexible and/or elastically yielding base substrate 2 and the covering and protection layer 4 is concerned, it is pointed out herein that it is selected from the group consisting of high density elastomeric aggregate, recycled or not aggregate elastomeric (such as for instance rubber of scrap tires, PVC, linoleum and similar elastomeric materials), loaded or not with thermo-conductive aggregates of mineral, synthetic nature and/or the like such as for example corundum, basalt, aluminium, copper, carbon, graphene and/or similar materials having conductive properties of heat, aggregate which in any case is able of keeping elasticity and deformability.

In particular, in the embodiment of the heating prefabricated continuous composite flooring 1 of figure 1, the covering and protection layer 4 is optionally but not exclusively made of the recycled elastomeric aggregate loaded with conductive aggregates of mineral or synthetic nature; at preferred but not binding title, the elastomeric component of the aggregate is derived from crushing and processing of worn tires for vehicles.

Moreover, the conductive mineral aggregates mixed with the pure rubbery component (or dough) of the elastomeric aggregate include any of the quartz aggregates selected from the group consisting of corundum aggregate, copper aggregate, aluminium aggregate, carbon, graphite, graphene or similar thermo-conductive materials.

It should be noted that, generally although not necessarily, the flexible and/or elastically yielding base substrate 2 and the covering and protection layer 4 are simultaneously made of the same material, selected from those ones just detailed above.

Preferably but not necessarily, the base substrate 2, the thermo-heating means 3 and the covering and protection layer 4 form, in this case, a monolithic body as layered artifact, obtained by thermo-moulding directly in the production plant where the bidirectional-heating prefabricated continuous composite flooring of the invention comes out as prefabricated finished product, in particular in the shape of rolls, as already said.

Further embodiments of the invention, not shown, could exist in which the heating prefabricated continuous composite flooring, shown in figure 1 and using a laminar semi-conductive element (or film or membrane) as thermo-heating means, could provide that the base substrate, the thermo-heating means and the covering and protection layer are pieces separately commercialized and assembled each other at a later time, in production, by gluing, vulcanization, heat welding and/or continuous wire sewing of material with high flexural strength, so as to form the layered artifact. In such a case, suitably, the assembly constructive obtained by the mutual junction among the base substrate, the thermo-heating means and the covering and protection layer is made waterproof by a special liquid perimetrical gasket.

In addition, the outer surface 4a of the covering and protection layer 4 of the heating prefabricated continuous composite flooring 1 of the invention is, preferably but not necessarily, skidproof due to the intrinsic composition of the conductive material which is made of (elastomeric aggregate, in its various versions) and/or to the surface treatment which makes it partly wrinkled or provided with high friction coefficient.

It also worth noting that the layered artifact of the bidirectional-heating prefabricated continuous composite flooring of the invention, if the thermo-heating means comprise at least one laminar semi-conductive element, presents a thickness in the range of values 6÷12 mm when the decking of the covering and protection layer 4 is walkable and/or bicycle, or a thickness in the range of values 10÷15 mm when such a deicing and waterproof decking of the covering and protection layer 4 is not only walkable and/or bicycle but also carriageable for industrial use as well as crossable by animals.

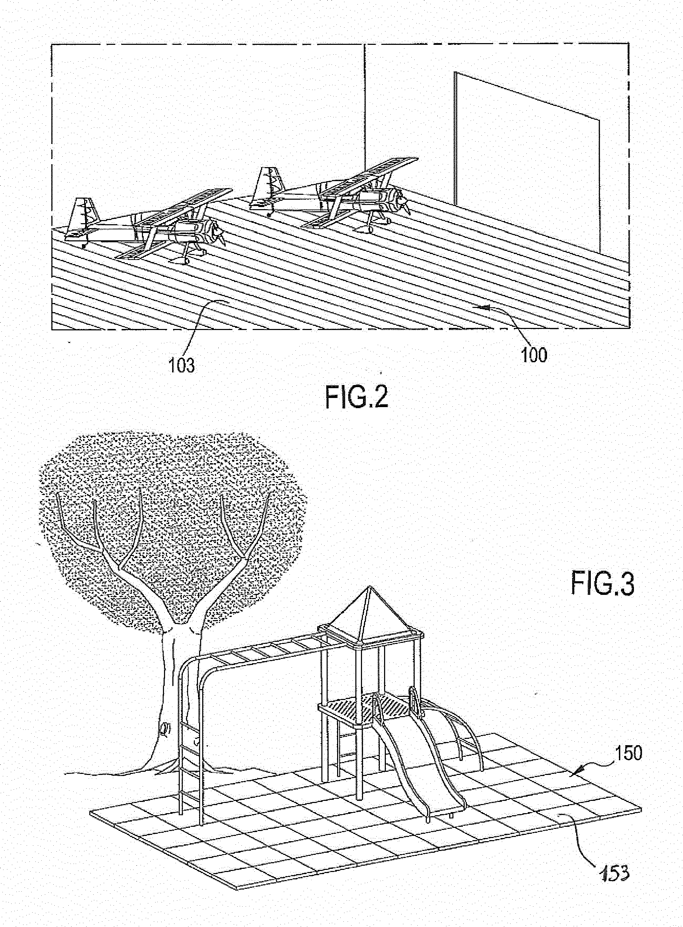

The subsequent figures 2 and 3 highlight, by way of pure example, some applicative types of the heating-bidirectional prefabricated continuous composite flooring of the invention, indicated with 1 and described before: in particular, figure 2 shows a hangar of an airport (industrial environment) in which the heating-bidirectional prefabricated continuous composite flooring of the invention bidirectional form, indicated as a whole with 100, might be necessarily suitable for vehicles, so that it will be of electric type (i.e. it will include for example at least one laminar semi-conductive element), and must present:
- layered artifact thickness in the range of values 6÷15 mm;
- outer surface of the covering and protection layer 103 made of recycled rubbery aggregate loaded or not with conductive aggregates of mineral nature and with silica, quartz, carbon, graphite, graphene sands or similar, in order to increase the abrasion resistance thereof;
- rubbery loaded or not with sands aggregate density in the range of values 900÷1,600 Kg/m³.

Figure 3 illustrates, instead, a view of a children's playground in which, some bidirectional-heating prefabricated continuous composite flooring of the invention are positioned, in the form of surface-printed rolls: in this case, each of the rolls (as a whole numbered with 150) could be simply walkable, bicycle and lightly carriageable, avoid ice formation in order to ease passage (not only for pedestrians) on it and prevent injuries to people, so that it could be of electric type (i.e. it could for example include at least one laminar resistive element) and must present:
- layered artifact thickness in the range of values 6÷12 mm;
- outer surface of the covering and protection layer 153 made of recycled rubbery aggregate not loaded with conductive mineral aggregates, in order to improve the anti-trauma behavior of the layered artifact in cases of fall of people who move on it;
- density within the range of values 800+1,200 Kg/m³.

In other applicative solutions, not shown, the bidirectional-heating prefabricated continuous composite flooring of the invention could be installed in animals breeding shed, such as a stable, widely exposed to the outer environment and, therefore, to the variability of its weather conditions during the year: also for this rather burdensome application, the bidirectional-heating prefabricated continuous composite flooring of the present invention, monolithic or assembled in a post-production phase in a company factory depending on the choices, could for example, present the technical features described above in relation to the previous composite flooring 100, requiring the highest and performing values of the parameters indicated above (thickness of the layered artifact, type and density of the material forming the covering and protection layer) as carriageable for instance with agricultural vehicles.

The description just provided allows, therefore, to highlight how the bidirectional-heating prefabricated continuous composite flooring, preferably also deicing, of the invention achieves the purposes and reaches the advantages previously listed.

The bidirectional-heating prefabricated continuous composite flooring of the invention could be produced in rolls and/or slabs made in monolithic pattern, with power supply, according to the use destinations (public-civil, residential or industrial), as it is apparent from that previously described.

Thanks to the innovative technical features of the invention described herein, it could be possible to provide bidirectional-heating (or radiant) prefabricated continuous composite flooring, also deicing and in particular for outdoor environments, with different layers (in respect to the material composition) and different thicknesses, selected in order to fulfill mutually diversified intended use.

The bidirectional-heating prefabricated continuous composite flooring of the invention could find application in many other situations and environments, different from those ones described and/or shown in the accompanying figures carrying only application examples: in particular, the bidirectional-heating prefabricated continuous composite flooring of the present invention could constitute the flooring (preferably, also removable) used to receive street vendors at a city or municipal market for retail outdoor, or the flooring of a shed for the animals husbandry or the safely walkway at the entry of commercial activities or public services.

The reduction of the thicknesses and the maintenance of a good mechanics and durability, which cannot be found in the prior art, are the main factors of the composite paving object of the invention that operates using high density and elastic memory materials.

This new combination of materials of the invention allows the production of slabs and rolls from a thickness of 6 mm up to 15 mm which are able of easily supporting surface traffic as soon as installed, do not suffer from moisture, water and frost nor oxidation and carbonation and are, thus, durable and without need for maintenance over time.

The installation of the bidirectional-heating prefabricated continuous composite flooring of the invention presents an almost null or quite limited time invasiveness level, however such that to not obstruct the industrial environments production cycle or to not cause service interruption for business addressed to the public.

## Claims

1. Bidirectional-heating prefabricated continuous composite flooring (1; 100; 150) which includes a layered artifact comprising:
• a flexible and/or elastically yielding base substrate (2), made of a thermo-conductive material and suitable to be set on a reference surface;
• thermo-heating means (3) of the electric type, arranged above said base substrate (2) and using a very low voltage supply in the range of 12 to 48 Volts;
• a covering and protection layer (4; 103; 153), made of a thermo-conductive material, arranged above said thermo-heating means (3) in such a way as to form an overall sandwich structure and provided with an outer facing upwardly surface (4a) which provides for a heating walkable, bicycle and/or carriageable decking,
in such a way that the heat produced by said heating means (3) is irradiated in bidirectional way both upwardly, above said covering and protection layer (4), and downwardly, below said base substrate (2).

2. Flooring (1; 100; 150) according to claim 1), **characterized in that** said thermo-heating means (3) include at least one laminar semi-conductive element (5) provided with a single electrical connection for the connection to an electric power supply source at said very low voltage.

3. Flooring (1; 100; 150) according to claim 2), **characterized in that** said laminar semi-conductive element (5) is made of a combination of carbon, PRT, silver glance and/or copper materials.

4. Flooring (1; 100; 150) according to any of the preceding claims, **characterized in that** said conductive material is selected from the group consisting of high density elastomeric aggregate, recycled elastomeric or non-elastomeric aggregate, loaded or not with thermo-conductive aggregates of mineral, synthetic nature.

5. Flooring (1; 100; 150) according to claim 4), **characterized in that** said conductive aggregates of mineral or synthetic nature include any of the quartz aggregates selected from the group consisting of corundum aggregate, copper aggregate, zinc aggregate, aluminium aggregate, carbon, graphite, graphene.

6. Flooring (1; 100; 150) according to any of the preceding claims, **characterized in that** said base substrate (2), said thermo-heating means (3) and said covering and protection layer (4; 103; 153 ) form a monolithic body obtained by thermo-moulding in production plant.

7. Flooring according to any of the claims 1) to 5), **characterized in that** said base substrate, said thermo-heating means and said covering and protection layer form an assembled body obtained in place for gluing, vulcanization, heat-welding and/or continuous wire sewing of material with high flexural strength among said base substrate, said thermo-heating means and said covering and protection layer.

8. Flooring (1; 100; 150) according to claim 2) or 3), **characterized in that**, when said thermo-heating means (3) comprise said laminar semi-conductive element (5), said layered artifact presents a thickness comprised in the range of values of 6 up to 12 mm when said decking of said covering and protection layer (4; 103; 153) is walkable on and/or bicycle, or a thickness in the range of values of 10 up to 15 mm when said decking of said covering and protection layer (4; 103; 153) is walkable on, bicycle and/or carriageable.

9. Flooring (1; 100; 150) according to any of the preceding claims, **characterized in that** said outer surface (4a) of said covering and protection layer (4; 103; 153) is skidproof due to the intrinsic composition of said conductive material with which it is made and/or due to surface treatment.

## Patentansprüche

1. Vorgefertigter kontinuierlicher zusammengesetzter Fußboden für bidirektionales Heizen (1; 100; 150), der ein geschichtetes Artefakt einschließt, umfassend:
• ein flexibles und/oder elastisch nachgebendes Basissubstrat (2), das aus einem wärmeleitenden Material besteht und geeignet ist, auf eine Referenzoberfläche gesetzt zu werden;
• Thermoheizmittel (3) vom elektrischen Typ, die über dem Basissubstrat (2) angeordnet sind und eine sehr niedrige Versorgungsspannung im Bereich von 12 bis 48 Volt verwenden;
• eine Deck- und Schutzschicht (4; 103; 153) aus einem wärmeleitenden Material, die oberhalb der Thermoheizmittel (3) so angeordnet ist, dass sie eine Gesamtsandwichstruktur bildet, und die mit einer nach oben weisenden äußeren Oberfläche (4a) versehen ist, die einen begehbaren, fahrradtauglichen und/oder befahrbaren Heizbelag bereitstellt,
in der Weise, dass die von den Heizmitteln (3) erzeugte Wärme sowohl nach oben, oberhalb der Deck- und Schutzschicht (4), als auch nach unten, unterhalb des Basissubstrats (2), bidirektional ausgestrahlt wird.

2. Fußboden (1; 100; 150) nach Anspruch 1), **dadurch gekennzeichnet, dass** die Thermoheizmittel (3) mindestens ein laminares halbleitendes Element (5) umfassen, das mit einem einzigen elektrischen Anschluss für die Verbindung mit einer elektrischen Stromversorgungsquelle bei der sehr niedrigen Spannung versehen ist.

3. Fußboden (1; 100; 150) nach Anspruch 2), **dadurch gekennzeichnet, dass** das laminare halbleitende Element (5) aus einer Kombination von Kohlenstoff-, PRT-, Silberglanz- und/oder Kupfermaterialien hergestellt ist.

4. Fußboden (1; 100; 150) nach einem der vorstehenden Ansprüche, **dadurch gekennzeichnet, dass** das leitende Material ausgewählt ist aus der Gruppe bestehend aus einem elastomeren Aggregat mit hoher Dichte, einem recycelten elastomeren oder nicht-elastomeren Aggregat, das mit oder ohne wärmeleitende Aggregate mineralischer oder synthetischer Natur beladen ist.

5. Fußboden (1; 100; 150) nach Anspruch 4), **dadurch gekennzeichnet, dass** die leitenden Aggregate mineralischer oder synthetischer Natur beliebige Quarzaggregate umfassen, die ausgewählt sind aus der Gruppe bestehend aus Korundaggregat, Kupferaggregat, Zinkaggregat, Aluminiumaggregat, Kohlenstoff, Graphit, Graphen.

6. Fußboden (1; 100; 150) nach einem der vorstehenden Ansprüche, **dadurch gekennzeichnet, dass** das Basissubstrat (2), die Thermoheizmittel (3) und die Deck- und Schutzschicht (4; 103; 153) einen monolithischen Körper bilden, der durch Thermoformen in einer Produktionsanlage erhalten wird.

7. Fußboden nach einem der Ansprüche 1) bis 5), **dadurch gekennzeichnet, dass** das Basissubstrat, die Thermoheizmittel und die Deck- und Schutzschicht einen zusammengesetzten Körper bilden, der durch Kleben, Vulkanisieren, Wärmeschweißen und/oder kontinuierliches Drahtnähen von Material mit hoher Biegefestigkeit zwischen dem Basissubstrat, den Thermoheizmitteln und der Deck- und Schutzschicht vor Ort erhalten wird.

8. Fußboden (1; 100; 150) nach Anspruch 2) oder 3), **dadurch gekennzeichnet, dass**, wenn die Thermoheizmittel (3) das laminare halbleitende Element (5) umfassen, das geschichtete Artefakt eine Dicke im Wertebereich von 6 bis 12 mm aufweist, wenn der Belag der Deck- und Schutzschicht (4; 103; 153) begehbar und/oder fahrradtauglich ist, oder eine Dicke im Wertebereich von 10 bis 15 mm aufweist, wenn der Belag der Deck- und Schutzschicht (4; 103; 153) begehbar, fahrradtauglich und/oder befahrbar ist.

9. Fußboden (1; 100; 150) nach einem der vorstehenden Ansprüche, **dadurch gekennzeichnet, dass** die äußere Oberfläche (4a) der Deck- und Schutzschicht (4; 103; 153) aufgrund der intrinsischen Zusammensetzung des leitenden Materials, aus dem sie hergestellt ist, und/oder aufgrund einer Oberflächenbehandlung rutschfest ist.

## Revendications

1. Plancher composite continu préfabriqué à chauffage bidirectionnel (1 ; 100 ; 150) qui inclut un objet en couches comprenant :
• un substrat de base (2) flexible et/ou élastique, constitué d'un matériau conducteur thermique et approprié pour être placé sur une surface de référence ;
• des moyens de chauffage thermique (3) du type électrique, agencés au-dessus dudit substrat de base (2) et utilisant une alimentation à très basse tension dans la plage de 12 à 48 Volts ;
• une couche de recouvrement et de protection (4; 103; 153), constituée d'un matériau conducteur thermique, agencée au-dessus desdits moyens de chauffage thermique (3) de manière à former une structure globale en sandwich et munie d'une surface externe faisant face vers le haut (4a) qui constitue un platelage chauffant praticable à pied, à bicyclette et/ou en voiture,
d'une manière telle que la chaleur produite par lesdits moyens de chauffage (3) irradie de manière bidirectionnelle à la fois vers le haut, au-dessus de ladite couche de recouvrement et de protection (4), et vers le bas, au-dessous dudit substrat de base (2).

2. Plancher (1 ; 100 ; 150) selon la revendication 1), **caractérisé en ce que** lesdits moyens de chauffage thermique (3) incluent au moins un élément semi-conducteur laminaire (5) muni d'une unique connexion électrique pour la connexion à une source d'alimentation en énergie électrique à ladite très basse tension.

3. Plancher (1 ; 100 ; 150) selon la revendication 2), **caractérisé en ce que** ledit élément semi-conducteur laminaire (5) est constitué d'une combinaison de matériaux de carbone, de polyéthylène en treillis, PRT, d'aspect argenté et/ou de cuivre.

4. Plancher (1 ; 100 ; 150) selon l'une quelconque des revendications précédentes, **caractérisé en ce que** ledit matériau conducteur est sélectionné parmi le groupe constitué d'un agrégat élastomère à haute densité, d'un agrégat élastomère ou non élastomère recyclé, chargé ou non avec des agrégats conducteurs thermiques de nature synthétique, minérale.

5. Plancher (1 ; 100 ; 150) selon la revendication 4), **caractérisé en ce que** lesdits agrégats conducteurs de nature minérale ou synthétique incluent l'un quelconque des agrégats de quartz sélectionnés parmi le groupe constitué d'un agrégat de corindon, d'un agrégat de cuivre, d'un agrégat de zinc, d'un agrégat d'aluminium, du carbone, du graphite, du graphène.

6. Plancher (1 ; 100 ; 150) selon l'une quelconque des revendications précédentes, **caractérisé en ce que** ledit substrat de base (2), lesdits moyens de chauffage thermique (3) et ladite couche de recouvrement et de protection (4 ; 103 ; 153) forment un corps monolithique obtenu par moulage thermique dans une usine de production.

7. Plancher selon l'une quelconque des revendications 1) à 5), **caractérisé en ce que** ledit substrat de base, lesdits moyens de chauffage thermique et ladite couche de recouvrement et de protection forment un corps assemblé obtenu sur place pour le collage, la vulcanisation, le soudage thermique et/ou la couture en fil continu d'un matériau à haute résistance en flexion parmi ledit substrat de base, lesdits moyens de chauffage thermique et ladite couche de recouvrement et de protection.

8. Plancher (1 ; 100 ; 150) selon la revendication 2) ou 3), **caractérisé en ce que**, lorsque lesdits moyens de chauffage thermique (3) comprennent ledit élément semi-conducteur laminaire (5), ledit objet en couches présente une épaisseur comprise dans la plage de valeurs de 6 à 12 mm lorsque ledit platelage de ladite couche de recouvrement et de protection (4 ; 103 ; 153) est praticable à pied et/ou à bicyclette, ou une épaisseur dans la plage de valeurs de 10 à 15 mm lorsque ledit platelage de ladite couche de recouvrement et de protection (4 ; 103 ; 153) est praticable à pied, à bicyclette et/ou en voiture.

9. Plancher (1 ; 100 ; 150) selon l'une quelconque des revendications précédentes, **caractérisé en ce que** ladite surface externe (4a) de ladite couche de recouvrement et de protection (4 ; 103 ; 153) est antidérapante en raison de la composition intrinsèque dudit matériau conducteur dont elle est constituée et/ou en raison d'un traitement de surface.
